**Europäisches Patentamt**

(19) **European Patent Office**

**Office européen des brevets**

(11) Publication number: **0 066 327**
**A1**

(12) # EUROPEAN PATENT APPLICATION

(21) Application number: **82200603.7**

(22) Date of filing: **17.05.82**

(51) Int. Cl.³: **F 02 D 3/00**
**F 02 D 37/00, F 02 D 35/00**
**F 02 D 19/06**

(30) Priority: **18.05.81 NL 8102422**

(43) Date of publication of application:
**08.12.82 Bulletin 82/49**

(84) Designated Contracting States:
**AT BE CH DE FR GB IT LI LU NL SE**

(71) Applicant: **American Parts Service B.V.**
**Beverweg 41**
**NL-4817 LK Breda(NL)**

(72) Inventor: **Vermeulen, Pieter Johan Leonard**
**Parallelweg 28 a**
**NL-4845 CR Wagenberg(NL)**

(74) Representative: **Mommaerts, Johan Hendrik,**
**Dipl.-Phys.**
**Octrooibureau Lux Nassau-Odyckstraat 38**
**NL-2596 AJ Den Haag(NL)**

(54) **Fuel control system.**

(57) A system for controlling the fuel supply towards an internal combustion engine, comprising a fuel injection nozzle connected to a fuel reservoir by means of a fuel metering pump coupled to a variable speed driving motor, as well as an air flow meter included in the air supply duct and connected to a control circuit for controlling the rotational speed of the pump driving motor, said injection nozzle having a fixed passage, and in the fuel supply duct a fuel flow meter is included which is connected to the control circuit as well, so as to allow to control the pump motor speed so that the required ratio between the measured air and fuel quantities is adjusted. In particular this system can be made suitable for different kinds of fuel.

A system for controlling the fuel supply towards an internal
combustion engine.

In the current internal combustion engines with electrical ignition the fuel is sucked in through a spray nozzle of the
carburettor by the vacuum generated in the supply duct connected
to an air suction opening when opening an intake valve or port,
and then the fuel is finally distributed through the air flow taken
in.

This vaporisation is, then, not only adapted to a given
kind of fuel, but is, moreover, only optimal under definite
operational conditions, so that, mostly, several vaporising nozzles
are to be used in order to obtain, at different engine speeds, a
possibly good fuel supply, and, moreover, if a sudden acceleration
is desired, an auxiliary pump coupled to the throttle valve in the
air supply duct is to be used in order to satisfy the suddenly increased fuel demand, since the vaporisation by suction operates
too slowly. Conversely, when suddenly throttling the air passage,
the suddenly reduced demand will not immediately be followed, so
that fuel will be lost then. In such an engine it is not possible
to obtain an optimal air/fuel ratio under all circumstances.

A certain improvement can be obtained by means of so
called fuel injection, in which the fuel is no longer vaporised
by the vacuum in the supply duct, but also then it is not possible
to obtain an optimal air/fuel ratio under all circumstances.

As the petrol prices rise, also the need, on the one
hand, for a possibly economical use of this fuel, and, on the
other hand, for the use of other fuels increases. This should not
require changes in the engine itself, such as, for instance, an
adaptation of the compression ratio to the combustion qualities
of a different fuel, as long as such other fuels are not available
to such an extent that an adaptation of new engines would become
sensible, as, for instance, in the case of Diesel engines. Moreover it is desirable to be able to use a different fuel also in
existing petrol engines without requiring expensive provisions,
and the use of petrol should remain possible if the other fuel
cannot be replenished in time. This is already usual when using liquefied distillation gas (LPG) which is not available everywhere, and replenishing cannot take place in an arbitrary point. The use of such a gas requires, however, special auxiliary parts for allowing the liquefied gas to vaporise and to depressurise to a suitable pressure, and an additional difficulty is that the composition of such a gas (i.e. the propane/butane ratio) is not the same everywhere, so that an optimal adjustment cannot be reached under all circumstances.

Furthermore the use of alcohol as an additive for petrol or even as a fuel may increase in the near future, which will require still other adjustments of the air/fuel ratio, this again dependent on the mixing ratio used.

All these difficulties prevent, for the time being, a wider use of other fuels for internal combustion engines for vehicles, and, moreover, the already mentioned need for a more economical use of the available fuels still exists.

From DE-A 2 411 374 a system is known for controlling the fuel supply to an internal combustion engine, comprising an air supply duct with an air mass flow meter, in which duct and near the inlet of the engine a fuel injection nozzle is included which is connected to a fuel reservoir by means of a fuel supply duct provided with a fuel pump, the latter being coupled to a variable speed drive motor, said air flow meter being connected to a control circuit which is designed to control the rotational speed of said driving motor in function of the quantity of air sucked in as measured by the air flow meter. Moreover this known system comprises a second pump which is adapted to lead the fuel at a constant pressure to said first pump, said injection nozzle comprising a needle valve determining the spray aperture thereof and being coupled to a membrane on which acts, on the one hand, the supply pressure determined by the first pump, and, on the other hand, the fixed pressure determined by the second pump, all this in such a manner that, at an increase of the yield of the first pump, said valve is lifted so far that the pressure drop at the nozzle opening has become again equal to the fixed reference pressure.

Since the air flow measurement is a mass measurement, the magnitude which is of importance for the combustion and on which the fuel supply can be tuned will always be determined independent of the temperature and pressure. The control circuit can adapt the control characteristic in function of the speed and temperature of the engine and of possibly still other magnitudes, so that always an optimal combustion will be obtained.

Nevertheless this system has some draw-backs restricting its practical usefulness. With a variable nozzle opening the spray characteristics can be different at different openings, and in particular with different kinds of fuel. Such a system is, therefore, not suitable for using previously not depressurised and vaporised liquefied distillation gas for which there is a risk that at larger valve openings, vaporisation in the valve aperture will take place which will lead to a substantial local cooling. For depressurised and vaporised liquefied distillation gas such a system with a metering pump is not suitable at all. Moreover such an injection nozzle with a needle valve is very vulnerable so that an undisturbed operation cannot be ensured during a long time. The operation of this system is, moreover, dependent on the maintenance of a fixed pressure by the second pump, and, at a disturbance of said pump, the needle valve will be opened, and the fuel injection will therefore be disturbed.

It is an object of the invention to improve such a system in such a manner that it will become suitable for widely differing kinds of fuel, and will no longer comprise parts which are liable to disturbance.

To that end the system according to the invention is characterised in that it comprises a nozzle having a fixed nozzle aperture, and in that a fuel flow meter is included in the fuel supply duct which is connected to the control circuit as well, all this in such a manner that this circuit will control the fuel pump motor speed so that, at any moment, the required ratio between the measured quantities of air and fuel will be maintained.

The quantity of fuel is, now, unambiguously determined by the metering pump, and can, therefore, be unambiguously tuned to the quantity of air sucked in, and the injection nozzle has such an opening that, under all circumstances, the fuel is injected into the air flow in the liquid condition.

Preferably the fuel flow meter is arranged between the fuel pump and the injection nozzle, since beyond the pump no gas bubbles which might disturb the measurement will be present in the liquid anymore.

Also the fuel meter can be constructed as a mass flow meter so as to obtain a measurement which will be fully independent of density differences, and, when the control circuit is connected to sensors for the fuel temperature, the control circuit can also be designed so that the flow measurement is conversed in-to a mass measurement in correspondence with the temperature of the fuel.

Preferably the air flow meter is arranged before the throttle valve in the air supply duct, since before this valve only air sucked in by the engine is present.

The control circuit is, in particular, provided with an adjustment part adapted for adjusting the control circuit to control characteristics relating to different fuels. Particularly a selector switch can be used to that end which is connected to a selector valve for different fuels so that, when changing over on an other fuel, the control circuit is automatically adapted there-to.

Furthermore the throttle valve in the air supply duct can be bridged by a shunt provided with a control element, the latter being designed for being operated in function of the measurement of the temperature and/or rotational speed of the engine, in particular for readjusting the air flow as needed and independent of the throttle valve, e.g. for controlling the rotational speed of the engine.

From DE-A 2 544 444 a system is known per se, which is designed for being used with engines which should operate with different mixing ratios of petrol and alcohol, the mixing ratio being determined by means of a conductivity measurement. The measurement of the air sucked in is made by means of a venturi element, and is, therefore, not a mass measurement, and, moreover, the supply pressure of the fuel is adjusted in correspondence with the conductivity. Other controls do not take place therein.

Finally, from DE-A 2 814 639 a rotatable mechanical distribution valve for four different injection nozzles is known, the fuel supply being controlled dependent on the air flow sucked in, and, again, no mass measurement takes place.

- 5 -

The invention will be elucidated below by reference to a drawing in which the system according to the invention is shown as a block diagram.

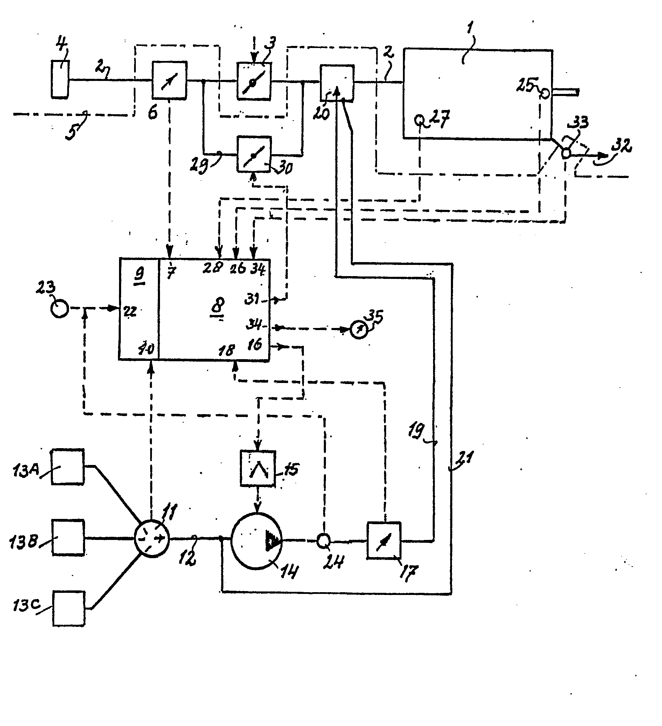

In the drawing a normal internal combustion engine is shown at 1, which, by means of a supply duct 2, is connected to a throttle valve 3 and an air filter 4. These elements, shown above an interrupted line 5, are of the current type, and need not to be replaced or changed. Only the elements below said line 5 belong to the system of the invention.

In the duct 2 a flow meter 6 is included which is adapted to measure the flow-through rate of the air sucked in. Preferably this meter is a mass flow meter. Since the mass of air is decisive for the combustion affect, its measurement is a correct basis for metering the quantity of fuel which will provide an optimal combustion. The measurement is independent of the temperature and pressure of the air sucked in so that this measurement will be dependable under all circumstances. Moisture present in the air will contribute to the mass measurement, but this will not lead to an incorrect result since moisture, like air, will contribute to the combustion. The reading of a mass flow meter is, therefore, more dependable than that of a volume flow meter.

The flow meter 6 is, preferably, arranged before the throttle valve 3 as shown, so as to avoid that, at a substantially closed throttle valve 3, fuel possibly present in the duct 2 would disturb the measurement.

The flow meter is connected to a control input 7 of an electronic control circuit 8 which is designed in such a manner that it will be capable of determining, in function of the characteristic of the engine, the optimal quantity of fuel corresponding to the measured quantity of air.

This control circuit comprises an adjustment part 9 designed to adapt the operation of the control circuit to the kind of fuel if the engine 1 should operate on different kinds of fuel, for example, apart from petrol, also on liquefied distillation gas (LPG) and/or alcohol mixtures or the like. To that end an adjustment input 10 thereof is, for example, coupled to a selector valve 11 adapted to connect at will a fuel supply duct 12 to different fuel reservoirs 13A..C.

The duct 12 is provided with a metering pump 14 which, if necessary by the intermediary of a servo amplifier 15, is connected to an output 16 of the control circuit 8. Although it is possible to design the circuit 8 so that the output signal determines the metering operation of the pump 14, it is better to perform the control by means of a flow meter 17 included in the flow duct 12 and connected to an additional control input 18 of the circuit 8, the pump 14 being controlled in such a manner that the desired ratio between the signals at the inputs 7 and 18 is maintained. In this manner the fuel metering becomes independent of the kind and yield of the pump, so that also in the case of wear of the pump a correct metering is maintained. Preferably the flow meter 17 is arranged behind the pump 14 so that, then, there is no longer any risk that vapour bubbles possibly present in the fuel would disturb the measurement, since these vapour bubbles disappear again in the pump 14 by compression.

The pump 14 is, by means of a duct 19, connected to an injection nozzle 20 opening into the supply duct 2 near the engine. This nozzle has a very narrow bore so that a rather large pressure drop will occur thereat, and liquid can be injected into the duct 2 by means of this nozzle, and the liquid flow can be very accurately and quickly adapted to the fluctuating conditions.

The inlet side of the engine is hot, so that immediately vaporisation of the liquid will take place there. This leads to a certain heat removal from the engine which is now effectively used and needs not to be removed by means of the cooling liquid, and, moreover, cooling of the air will lead to a better filling of the cylinders.

The nozzle 20 is, furthermore, provided with a valve, not shown, which remains closed until the difference between the pressure in the duct 19 and that in the duct 12 (i.e. the pressure in the reservoir 13 in question) exceeds a given value. The latter pressure is led towards the valve 20 by means of a measuring duct 21. In the nozzle a membrane is present which is connected to a valve, e.g. a needle valve, and at one side thereof the pressure in the duct 19, and at the other side the pressure in the duct 21 is present, and a spring provides the required presetting. If desired the valve can be made adjustable, e.g. dependent on the kind of fuel, and, if necessary, an additional connection to the circuit 8 can be provided.

In this manner the operation of the metering pump 14 is completely independent of the pressure of the fuel itself. Thereby it becomes possible to lead liquefied gas in the liquid condition through the pump 14, so as to obtain an accurate metering thereof. The liquefied gas will, then, vaporise only after leaving the nozzle 20. The above-mentioned pressure control prevents that depressurisation will take place in the duct 12 and/or 19, and also at a standstill of the pump 14 no gas can escape through this nozzle 20. Of course additional safety means can be used in order to interrupt the supply of liquefied gas, e.g. at a standstill of the engine, switching off the ignition, etc.

If the quality of a given fuel can vary, e.g. in the case of different kinds of petrol, different mixing ratios of propane and butane in liquefied gas, different mixing ratios of alcohol and petrol e.a., it can be desirable to readjust the control circuit accordingly. To that end the adjustment part 9 can be provided with an additional input 22 connected to a manual adjustment means 23. It is also possible to include in the fuel duct a sensor 24 connected to the input 22 and sensitive for differences in the quality of the fuel, and, for instance, a sensor sensitive for differences in the dielectric constant, the heat conductivity, the optical characteristics etc. at different fuel compositions can be used to that end. Such a sensor can, moreover, determine differences in the kind of fuel, so that the coupling between the selector 11 and the output 10 will, then, be superfluous.

Furthermore it can be important to tune the fuel supply to the rotational speed of the engine 1, and a sensor 25 included in the engine is used therefor, said sensor being connected to an additional control input 26 of the circuit 8. By means thereof, for instance, a minimum rotational speed can be maintained at zero load, and, if braking on the engine is required, during which the throttle valve 3 is completely closed, the fuel supply can be controlled accordingly. Moreover sometimes a better adaptation to the characteristics of the engine can be obtained thereby. The rotational speed sensor can, for instance, co-operate with the fly-wheel or the ignition. The presence of a rotational speed meter enables, furthermore, to construct the circuit 8 so that also the ignition and particularly the ignition moment can be controlled thereby. Furthermore a heat sensor 27 can be provided in the engine which is connected to an input 28 of the circuit 8. Thereby, for instance, an adaptation of the fuel supply when starting can be obtained, if, in a cold engine, a larger quantity of fuel at a given quantity of air is required.

In the drawing a shunt duct 29 shunting the throttle valve and being provided with a control element 30 is shown, the latter being connected to an additional output 31 of the circuit 8. Thereby it becomes possible to control additionally the quantity of air sucked in by the engine 1 independent of the position of the throttle valve 3, e.g. dependent on the indications of the sensors 25 and/or 27 for the rotational speed and the temperature resp. of the engine. This can, for instance, be important when braking on the motor for a long time during a descent with a closed throttle valve, and then the engine may become too cold, so that, then, by letting through some air and an according dose of fuel the temperature of the engine can be kept at a suitable level. Moreover, when the engine is running at zero load, the air supply can be readjusted in this manner, e.g. under control of the flow meter 6.

In the exhaust 32 of the engine 1 a sensor 33 can, moreover, be included, which is sensitive for the composition of the exhaust gas, e.g. for the oxygen and/or carbon dioxide content thereof. An oxygen surplus indicates an air excess, and a carbon dioxide surplus an air deficiency. This sensor 33 is connected to an additional input 34 of the circuit 8 in order to readjust the fuel supply accordingly, e.g. in such a manner that a low oxygen content is maintained in the exhaust gases. This additional control can only be switched on as soon as the sensor 27 has indicated that the engine has reached a suitable temperature.

On the basis of the various collected data the circuit 8 can, for example, calculate the fuel consumption which can be indicated by a meter 35 connected to an output 34. The circuit 8 can be extended still further in order to process data supplied thereto in still other manners.

For connecting such a system to an existing engine, use can be made of the available throttle valve, and then only the carburettor part is to be made inoperative and the elements 6 and 20 are to be included in the duct 2. These elements can, for instance, be made in the form of rather thin discs having dimensions corresponding to those of the duct 2, which discs are provided with flanges corresponding to the current flanges of air supply ducts 2, carburettors and engine manifolds, thus allowing a simple mounting.

In new engines it will be generally prefered to use a composite unit comprising the elements 6 and 20 as well as an intermediate throttle valve 3.

It will be clear that many modifications are possible within the scope of the invention.

Claims

1. A system for controlling the fuel supply towards an internal combustion engine, this engine being provided with an air supply duct with an air mass flow meter, in which duct near the inlet of the engine a fuel injection nozzle is included which is connected to a fuel reservoir by means of a fuel supply duct provided with a fuel metering pump, which pump is coupled with a variable speed driving motor, which air flow meter is connected to a control circuit which is adapted to control the rotational speed of said fuel pump driving motor in accordance with the quantity of air sucked in as measured by the air flow meter, characterised in that the injection nozzle has a fixed nozzle aperture, and in that a fuel flow meter is included in the fuel supply duct which is connected to the control circuit too, all this in such a manner that said circuit controls the fuel pump motor speed so that the ratio between the measured quantities of air and fuel required at any moment is adjusted.

2. The system of claim 1, characterised in that the fuel flow meter is arranged between the fuel pump and the injection nozzle.

3. The system of claim 1 or 2, characterised in that the fuel flow meter is a mass flow meter.

4. The system of claim 1 or 2, characterised in that the control circuit is connected to a sensor for the temperature of the fuel, and in that the fuel flow meter is a volume flow meter, and the control circuit is designed to derive the fuel mass from the volume and temperature measurements.

5. The system of any one of claims 1..4, in which in the air supply duct a throttle valve for controlling the air flow is included, characterised in that the air flow meter is included in the air supply duct before the throttle valve.

6. The system of any one of claims 1..5, characterised in that the control circuit is provided with an adjustment part, which is adapted to adjust the control circuit to control characteristics applying to different fuels.

7. The system of claim 6, characterised in that the adjustment part is coupled with a selector valve for different fuels.

8. The system of claim 6 or 7, characterised in that a sensor is included in the fuel duct which is sensitive for the kind of fuel, which sensor is connected to the adjustment part of the control circuit.

9. The system of any one of claims 1..8, <u>characterised</u> in that the injection nozzle is provided with a closure valve which is opened on reaching a given pressure difference between the outlet and inlet sides of the measuring pump.

10. The system of any one of claims 1..9, <u>characterised</u> in that the throttle valve in the air supply duct is shunted by a shunt provided with a control element which is adapted to be operated by the control circuit in function of a temperature and/or rotational speed measurement.

European Patent
Office

**EUROPEAN SEARCH REPORT**

Application number

EP 82 20 0603

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-4 112 901 (CHAPIN)<br>* column 3, line 59 to column 4, line 60; column 6, line 56 to column 7, line 33; column 11, lines 15 to 30; figures 1,2,3,8 * | 1,5,9 | F 02 D 3/00<br>F 02 D 37/00<br>F 02 D 35/00<br>F 02 D 19/06 |
| Y | DE-A-2 824 639 (NIPPON SOKEN)<br>* page 7, paragraph 1 to page 14, paragraph 1; page 17, paragraph 2 to page 19, paragraph 1; figure 1 * | 1,2,5 | |
| Y | DE-A-2 411 374 (THE LUCAS)<br>* page 2, line 17 to page 6, line 4; figures 1,2,3 * | 1,9 | |
| A | DE-A-2 544 444 (DAIMLER-BENZ)<br>* page 10, lines 1 to 34; figure 4 * | 1,6,8 | **TECHNICAL FIELDS SEARCHED (Int. Cl. 3)**<br><br>F 02 D<br>F 02 M |

The present search report has been drawn up for all claims

| Place of search | Date of completion of the search | Examiner |
|---|---|---|
| THE HAGUE | 24-08-1982 | HAKHVERDI M. |